# EUROPÄISCHE PATENTSCHRIFT

(11) **EP 0 689 188 B1**
(45) Veröffentlichungstag und Bekanntmachung des Hinweises auf die Patenterteilung: **27.03.2002**
(21) Anmeldenummer: 95109402.8
(22) Anmeldetag: 17.06.1995
(51) Int. Cl.: G01V 1/22, G01V 1/20, G10K 11/34

(54) **Schaltanordnung für eine ausgedehnte Empfangsanordnung**
Circuit for a spreaded receiver arrangement
Circuit pour un dispositif de réception étendu

(30) Priorität: 24.06.1994 DE 4422234
(43) Veröffentlichungstag der Anmeldung: 27.12.1995
(73) Patentinhaber: STN ATLAS Elektronik GmbH, 28305 Bremen (DE)
(72) Erfinder: Brenner, Axel, Dipl.-Ing., D-28259 Bremen (DE); Harten, Georg, Dipl.-Ing., D-28307 Bremen-Mahndorf (DE); Hoffmann, Peter, Dipl.-Ing., D-28832 Achim-Baden (DE); Meuser, Wilfried, Dipl.-Ing., D-28357 Bremen (DE); Nitzschke, Heinz, Dipl.-Ing., D-28355 Bremen (DE)
(74) Vertreter: Thul, Hermann, Dipl.-Phys.

(56) Entgegenhaltungen:
- EP-A- 0 263 314
- DE-A- 3 151 028
- US-A- 3 652 979
- US-A- 3 990 036
- US-A- 4 092 629
- US-A- 4 276 619
- US-A- 4 320 472

## Beschreibung

Die Erfindung bezieht sich auf eine Schaltanordnung zum zeitseriellen Übertragen von Empfangssignalen einer räumlich ausgedehnten Empfangsanordnung der im Oberbegriff des Anspruchs 1 genannten Art.

In der Wasserschalltechnik werden Schleppantennen zum Orten von schallabstrahlenden Zielen, z. B. Oberflächenschiffen, U-Booten oder Torpedos, eingesetzt. Sie werden von einem Schleppschiff oder U-Boot in vorgebbarer Tiefe nachgeschleppt. Über die Länge der Schleppantenne sind Hydrophone zum Empfangen und/oder Senden von Schallwellen angeordnet. Beim Empfang werden Empfangssignale vom Hydrophonort in der Schleppantenne zu dem Trägerfahrzeug übertragen und in einem Richtungsbildner zu einer Richtcharakteristik zusammengefaßt. Wegen der Länge der Schleppantenne sind Richtcharakteristiken bis zu extrem tiefen Frequenzen mit sehr kleinen Öffnungswinkeln realisierbar, so daß aufgrund der geringen Dämpfung tieffrequenter Schallwellen im Wasser auch Ziele in großer Entfernung gepeilt werden können.

In der der europäischen Patentanmeldung EP-A-0 561 911 ist eine Schleppantenne beschrieben, die aus einzelnen Abschnitten aufgebaut ist. In jedem Abschnitt befindet sich mindestens ein Hydrophon mit einer Schaltanordnung zum Abtasten und zeitseriellen Übertragen digitalisierter Empfangssignale über eine Datenleitung. Jedem Hydrophon ist eine Hydrophoneinheit mit Regelverstärker, regelbarem Filter und A/D-Wandler zugeordnet. Die digitalisierten Empfangssignale werden in einer ersten Multiplexschaltung gespeichert. Alle ersten Multiplexschaltungen an allen Hydrophonorten werden gleichzeitig über eine gemeinsame Synchronisierleitung mit einem ersten Synchronisiersignal synchronisiert und von einem Synchronisationsmodul aktiviert. Der Synchronisationsmodul wird dazu von einem von der Multiplexschaltung am vorherigen Hydrophonort generierten zweiten Synchronisiersignal angesteuert. Die erste Multiplexschaltung ist mit einem zweiten Multiplexer am Hydrophonort verbunden. Der zweite Multiplexer ist in die Datenleitung eingeschleift und schaltet die ankommenden Empfangssignale von den vorherigen Hydrophonorten weiter und dann auf die erste Multiplexschaltung um zur Weiterleitung des dort abgespeicherten Empfangssignals, Dazu wird der zweite Multiplexer mit in der ersten Multiplexschaltung generierten Taktimpulsen beaufschlagt, die synchron mit dem ersten und abhängig vom Eintreffen des zweiten Synchronisiersignals erzeugt werden.

Der Nachteil einer solchen Schaltanordnung besteht darin, daß der Datenfluß der digitalisierten Empfangssignale zum Erliegen kommt, wenn an einem der Hydrophonorte eine erste Multiplexschaltung oder ein zweiter Multiplexer ausfallen, da eine Übertragung der Empfangssignale von der Generierung des zweiten Synchonisiersignals in der ersten Multiplexschaltung am vorherigen Hydrophonort und von der Funktion des zweiten Multiplexers abhängig ist, der in die Datenleitung eingeschaltet ist.

Aus der US-A-3 652 979 ist eine Schaltanordnung bekannt, bei der einzelne individuelle Datenwerte einer Vielzahl von Meßaufnehmern an unterschiedlichen Meßorten über eine gemeinsame Datenleitung zu einer zentralen Aufzeichnungsanlage übertragen werden. Der momentane Datenwert wird über ein Tor auf die Datenleitung geschaltet, wenn in einem Kanalzähler eine dem Meßort zugeordnete Kanalzahl erreicht wird. Der Kanalzähler wird von einem am Meßort befindlichen Taktgenerator, der über eine allen Meßorten gemeinsame Synchronisierleitung synchronisiert wird, gespeist. Die Datenwerte werden der Meßorte nacheinander abgetastet und der jeweilige Datenwert übertragen. Der Nachteil dieser Schaltanordnung besteht darin, daß der Abfrage- und Übertragungszeitpunkt der einzelnen individuellen Datenwerte zusammenliegen und von der Lage des Meßorts abhängen.

Es ist Aufgabe der vorliegenden Erfindung, eine Schaltanordnung der im Oberbegriff des Anspruchs 1 genannten Art zu schaffen, die auch dann eine vom Abfragezeitpunkt unabhängige Übertragung digitalisierter Empfangssignale über die Datenleitung gewährleistet, wenn an einem oder mehreren der Wandlerorte Teile oder die gesamte Schaltanordnung ausfallen.

Diese Aufgabe wird erfindungsgemäß durch die Merkmale im Kennzeichenteil des Anspruchs 1 gelöst.

In dem Aufsatz "Classification and Identification" (CAI) by Submarine Sonar, aus Naval Forces, Nr. 6, 1987, von L. Kühnle, ist in der Abbildung auf Seite 28 ein U-Boot mit seinen akustischen Ortungseinrichtungen dargestellt. Drei akustische Antennen, die viele elektroakustische Wandler aufweisen, und Meßstellen zur Eigengeräuschanalyse (ONA) sind dort zu sehen. Sie bilden jedes für sich eine räumlich ausgedehnte Empfangsanordnung für akustische Signale, deren elektroakustische Wandler an unterschiedlichen Wandlerorten angeordnet sind. Ihre Empfangssignale werden in der erfindungsgemäßen Schaltanordnung digitalisiert und über die Datenleitung zu der zugehörigen Empfangsanlage übertragen. Zu einem dort gezeigten Flank Array System (FAS) gehört eine Seitenantenne, deren Hydrophone als elektroakustische Wandler z. B. in einem Streamer an der Längsseite des U-Boots angeordnet sind. Dieser Streamer ist genauso aufgebaut wie der akustische Abschnitt einer Schleppantenne, der unter einem Hüllkörper an der Außenwand des U-Boots angebracht ist, wie es in der DE-OS 36 61 132 beschrieben ist. Weiterhin ist dort ein Towed Array System (TAS) mit einer Schleppantenne gezeigt, die an unterschiedlichen Wandlerorten eine Vielzahl von Hydrophonen aufweist. Wegen der geringen räumlichen Ausdehnung der erfindungsgemäßen Schaltanordnung nach Anspruch 1 ist ihre Anwendung in einer Schleppantenne besonders vorteilhaft, deren Durchmesser wegen des Strömungsrauschens bei Fahrt möglichst gering gehalten werden soll. Oberhalb des Flank Array sind drei Wandlergruppen für eine passive Entfernungsmessung (PRS) dargestellt, wobei jedem Hydrophon in der Wandlergruppe eine erfindungsgemäße Schaltanordnung zugeordnet wird. Mehrere Meßstellen zur Eigengeräuschanalyse an Bord des U-Bootes (ONA) sind ebenfalls angedeutet. Dort werden an unterschiedlichen Wandlerorten, z. B. in der Nähe des Antriebs und des U-Boot-Turmes, Körperschallsensoren als elektroakustische Wandler angeordnet, die ebenfalls eine räumlich ausgedehnte Empfangsordnung bilden. Für jedes dort gezeigte System FAS, TAS, PRS oder ONA werden an jedem Wandlerort Empfangssignale in der erfindungsgemäßen Schaltanordnung digitalisiert und über eine zu jedem System gehörende Datenleitung zu seiner Empfangsanlage übertragen, ohne daß die Datenleitung selbst in die Schaltanordnung eingeschleift ist. Synchronisierleitung und Datenleitung sind nicht Bestandteil jeder Schaltanordnung an den Wandlerorten, sondern durchgängig geführt.

An die Synchronisierleitung ist an jedem Wandlerort ein Taktgenerator angeschlossen, der von Synchronisierimpulsen auf der Synchronisierleitung bezüglich Phase und Frequenz geregelt wird. Der Ausgang eines Tores ist mit der Datenleitung zur Übernahme und Weiterleitung des digitalisierten Empfangssignals verbunden. Der besondere Vorteil der erfindungsgemäßen Schaltanordnung besteht darin, daß das digitalisierte Empfangssignal ohne Multiplexer oder andere Umschalteinheiten direkt auf die Datenleitung geschaltet wird. Besonders vorteilhaft ist, daß jede Schaltanordnung am Wandlerort autark ist und unabhängig von den Schaltanordnungen an benachbarten oder weit entfernten Hydrophonorten arbeitet.

In einem Zähler, der dem Taktgenerator nachgeordnet ist, wird ein Zeitabschnitt zum gleichzeitigen Abtasten und Digitalisieren sämtlicher Empfangssignale an allen Hydrophonorten eingestellt. Alle Zähler werden gleichzeitig gestartet. In dem Zeitabschnitt werden alle Wandler gleichzeitig abgetastet, Abtastwerte ihrer Empfangssignale digitalisiert und abgespeichert. An diesen Zeitabschnitt schließt sich ein Zeitintervall an, das zum Übertragen der digitalisierten Empfangssignale genutzt wird. Mit einem Kanalzahlgeber ist jeder Hydrophonort mit einer Kanalzahl gekennzeichnet., Nach Ablauf des Zeitabschnitts wird ein Kanalzähler aktiviert, der mit einem Komparator verbunden ist. Wenn der Kanalzähler die Kanalzahl erreicht hat, die im Kanalzahlgeber eingestellt ist, wird über den Komparator das Tor freigeschaltet, das mit dem digitalisierten Empfangssignal an diesem Wandlerort beaufschlagt ist. Der Ausgang des Tores ist direkt mit der Datenleitung verbunden. Der Vorteil besteht darin, daß die Datenübernahme auf die Datenleitung unabhängig davon ist, ob vorher andere digitalisierte Empfangssignale von anderen Wandlerorten die Datenleitung passiert haben und ob weitere Empfangssignale an dieses Empfangssignal angereiht werden. Die Schaltanordnung an jedem Wandlerort arbeitet autark, es muß nur gewährleistet sein, daß die Synchronisierleitung Synchronisierimpulse führt.

Der Vorteil der Weiterbildung der erfindungsgemäßen Schaltanordnung in einer Schleppantenne mit Hydrophonen nach Anspruch 2 mit einer Zusammenfassung einer Anzahl von Hydrophonen am Hydrophonort als Wandlerlort, die längs der Schleppantenne angeordnet sind, zu einer Gruppe besteht darin, daß die Summe aller Hydrophonsignale das Empfangssignal bildet. Durch die Summation am Hydrophonort wird eine Störbefreiung des Empfangssignals von Strömungsgeräuschen längs der Schleppantenne erreicht. Der Aufwand reduziert sich, da nicht für jedes Hydrophon eine Schaltanordnung benötigt wird und die Datenrate geringer ist.

Gemäß den vorteilhaften Weiterbildungen der erfindungsgemäßen Schaltanordnung nach den Ansprüchen 3 und 4 sind die Abstände und die Anzahl der Hydrophone am Hydrophonort, die eine Gruppe bilden, wegen der niedrigen Ortungsfrequenzen so wählbar, daß die Länge der Gruppen an jedem Hydrophonort kleiner als die kleinste halbe Wellenlänge eines auszuwertenden Empfangsfrequenzbereichs ist. Der Vorteil einer solchen Gruppenbildung besteht darin, daß die Richtfunktion dieser Gruppe seitlich zur Schleppantenne im wesentlichen eine Rundumcharakteristik ist und der Eigencharakteristik der einzelnen Hydrophone entspricht, andererseits jedoch trotz so geringer Abstände der einzelnen Hydrophone voneinander eine Störbefreiung gegen Strömungsgeräusche erzielt wird, da von der Strömung längs der Schleppantenne verursachte Signalanteile in jedem einzelnen Hydrophonsignal nicht mehr kohärent sind und sich somit durch die Summenbildung das Nutz/Störverhältnis des Empfangssignals verbessern wird. Erst anschließend wird das so gebildete analoge Empfangssignal abgetastet und digitalisiert.

Aus der europäischen Patentschrift 0 263 314 ist es bekannt, zum Erzielen eines konstanten Öffnungswinkels von Richtcharakteristiken einer Schleppantenne über einen großen Frequenzbereich den gesamten Frequenzbereich in aneinandergrenzende Empfangsfrequenzbereiche aufzuteilen, vorzugsweise in Oktaven, und unterschiedlichen Antennenlängen zuzuordnen, die sich bei einer Aufteilung in Oktaven jeweils mit niedriger werden dem Empfangsfrequenzbereich verdoppeln. Jede Antennenlänge weist dabei eine gleiche Anzahl von elektroakustischen Wandlern auf, die äquidistant im Abstand der halben zugehörigen Wellenlänge angeordnet sind. Durch Verschachtelung der Antennenlänge und bei Verwendung von Oktaven können Wandler in der Mitte der Schleppantenne für alle Empfangsfrequenzbereiche verwendet werden, während Wandler am Anfang und Ende der Schleppantenne, die zu der größten Antennenlänge gehören, nur für eine Richtungsbildung im tiefsten Empfangsfrequenzbereich verwendet werden.

Verwendet man eine solche Wandleranordnung im Zusammenhang mit der erfindungsgemäßen Schaltanordnung gemäß Anspruch 5 und 6, so entsprechen Entfernungen der Hydrophonorte den Abständen der Wandler auf den Antennenlängen. Die Wandler werden durch einzelne Hydrophone oder Gruppen von Hydrophonen gebildet. Erfindungsgemäß wird bei äquidistanter Anordnung der Hydrophone längs des mittleren Bereichs der Schleppantenne eine unterschiedliche Anzahl von Hydrophonen am Hydrophonort zu einer Gruppe zusammengefaßt, die das zu übertragende Empfangssignal für die Richtcharakteristik des entsprechenden Empfangsfrequenzbereichs liefern. In dem äußeren Bereich der Schleppantenne werden die Abstände zwischen den Hydrophonen einer Gruppe vergößert, so daß jeweils Schwerpunktabstände der Gruppen, die den Entfernungen der Hydrophonorte entsprechen, der halben Wellenlänge des betrachteten Empfangsfrequenzbereichs angepaßt werden und die Zahl an Gruppen für die Richtungsbildung in jedem Empfangsfrequenzbereich gleich groß ist. Der Vorteil einer solchen Zusammenfassung von Hydrophonsignalen zu Empfangssignalen besteht darin, daß die Belegung der Schleppantenne und die Anzahl der Schaltanordnungen bei gleichem Nutz/Störverhältnis reduziert werden kann.

Bei der vorteilhaften Weiterbildung der erfindungsgemäßen Schaltanordnung nach Anspruch 7 werden drei hintereinanderliegende Hydrophone verwendet oder die Anzahl der Hydrophone am Hydrophonort in drei Untergruppen aufgeteilt, deren Abbstände vorzugsweise ein Viertel der betrachteten Wellenlänge betragen. Durch Summe-Differenz- und/oder Verzögerungsglieder werden die Hydrophonsignale zu einer Kardioidencharakteristik miteinander verknüpft, wie es beispielweise in der DE-PS 31 51 028 beschrieben ist. Die Nullstelle der Kardioidencharakteristik weist zum Schleppschiff der Schleppantenne. Jede so gebildete Kardioidencharakteristik liefert am Hydrophonort das Empfangssignal, das über die erfindungsgemäße Schaltanordung übertragen wird. Der Vorteil einer solchen Gruppenbildung besteht darin, daß Signalanteile im Empfangssignal, die vom Schleppschiff stammen, im betrachteten Empfangsfrequenzbereich durch die Kardioidenbildung unterdrückt werden.

Bei jeder Anwendung der erfindungsgemäßen Schaltanordnung, sei es in einer Schleppantenne, einem Flank-Array oder einem über das genannte Trägerfahrzeug verteilten Empfangssystem aus Körperschallsensoren, weist der Zähler einen Abschnittszähler für Taktimpulse aus dem Taktgenerator auf, der den Zeitabschnitt definiert. Für eine zeitserielle Digitalisierung des Empfangssignals vorgebbarer Bitlänge. Innerhalb des Zeitabschnitts wird das Empfangssignal abgetastet und analaog/digital gewandelt. Parallel dazu ist ein Transferzähler angeordnet, der ebenfalls mit den Taktimpulsen gespeist wird. Nach Ablauf des Zeitabschnitts gibt der Transferzähler immer dann einen Kanalimpuls ab, wenn so viele Taktimpulse eingezählt worden sind, wie die Bitlänge des zeitseriellen digitalisierten Empfangssignals gewählt ist. Dieser Kanalimpuls wird im Kanalzähler gezählt und mit der Kanalzahl im Komparator verglichen. Wenn der Kanalzähler die Kanalzahl erreicht hat, schaltet der Komparator das Tor frei. Das Tor ist eingangsseitig mit einem Schiebespeicher verbunden, der dem Analog/Digital-Wandler nachgeordnet ist. Nach Ablauf des Zeitabschnitts wird der Schiebespeicher nach Erreichen der Kanalzahl mit Taktimpulsen versorgt und schiebt das zeitserielle digitale Empfangssignal über das Tor auf den Datenbus. Der Vorteil einer solchen Schaltanordnung nach Anspruch 8 besteht darin, daß die Digitalisierung und die Übertragung über die Datenleitung zeitlich völlig getrennt sind und somit sich nicht gegenseitig stören können. Ein Übersprechen der Datenleitung während der Abtastung, Verstärkung und Digitalisierung der Empfangssignale ist nicht möglich, da zu der Zeit auf der Datenleitung keinerlei digitale Daten laufen. Ebenso ist eine Störung des Datenflusses auf der Datenleitung nicht gegeben, da die Analog/Digitalwandlung nicht zur Zeit des Datentransfers stattfindet. Ein weiterer Vorteil dieser Weiterbildung besteht in ihrem Aufbau mit einfachen standardisierten Schaltmitteln. Eine Übertragung des zum Wandlerort gehörigen Empfangssignals erfolgt nur dann, wenn die Schaltung insgesamt funktionsfähig ist. Andererseits wird die Übertragung der digitalisierten Empfangssignale über die Datenleitung nicht gestört, wenn an einem oder mehreren Wandlerorten die Schaltanordnung durch äußere Einflüsse gestört wurde.

Besonders vorteilhaft ist es, wenn gemäß der Weiterbildung der erfindungsgemäßen Schaltanordnung nach Anspruch 9 das Tor als Leitungstreiber ausgebildet ist, der die Bits des Empfangssignals in Form von Reckeckimpulsen verstärkt, wobei gemäß der vorteilhaften Weiterbildung der erfindungsgemäßen Schaltanordnung nach Anspruch 10 die Rechteckimpulse differenziert werden und die Zeitkonstante des Differentiationsglieds so dimensioniert ist, daß der Frequenzgang der Datenleitung kompensiert wird.

Der Vorteil der Weiterbildung der erfindungsgemäßen Schaltanordnung nach Anspruch 11 besteht darin, daß Impulszüge auf der Synchronisierleitung und der Datenleitung gleiche Frequenz aufweisen und eine Synchronisation der in der Schaltanordnung verwendeten Taktimpulse doppelter Frequenz mit dem Master Clock auf der Synchronisierleitung durch die PLL-Schaltung sicher gewährleistet ist.

Die vorteilhafte Weiterbildung der erfindungsgemäßen Schaltanordnung nach Anspruch 12 bietet für eine Schleppantenne die Möglichkeit, mit einem bistabilen Reed-Relais zwischen Komparator und Tor beim Auftrommeln oder Abtrommeln der Schleppantenne auf dem Schleppschiff einzelne Hydrophone bzw. Hydrophongruppen am jeweiligen Wandlerort ein- oder auszuschalten, ohne daß die Schleppantenne selbst geöffnet werden muß und Schaltanordnungen und Hydrophone ausgebaut werden müssen. Damit reduziert sich der Aufwand an Zeit und Arbeit ganz erheblich und die Funktionsweise der Schleppantenne bleibt im wesentlichen erhalten, auch wenn Schaltanordnungen oder Hydrophone an einem oder mehreren der Wandlerorte ausgefallen sind. Ein anderer Vorteil besteht darin, daß nur diejenigen Wandlerorte aktiviert werden, die für den Einsatz der Schleppantenne notwendig sind, so daß für unterschiedliche Einsätze die gleiche Schleppantenne verwendet werden kann.

Die Erfindung ist in einem in der Zeichnung dargestellten Ausführungsbeispiel einer Schaltanordnung für Empfangssignale einer Schleppantenne als räumlich ausgedehnte Empfangsanlage mit einer Vielzahl von Hydrophonen näher beschrieben. Es zeigen:
- Fig. 1: ein Blockschaltbild der Schaltanordnung,
- Fig. 2.1 bis 2.7: Zeitdiagramme und
- Fig.3: Wandlerorte längs der Schleppantenne mit Schaltanordnungen gemäß Fig. 1.

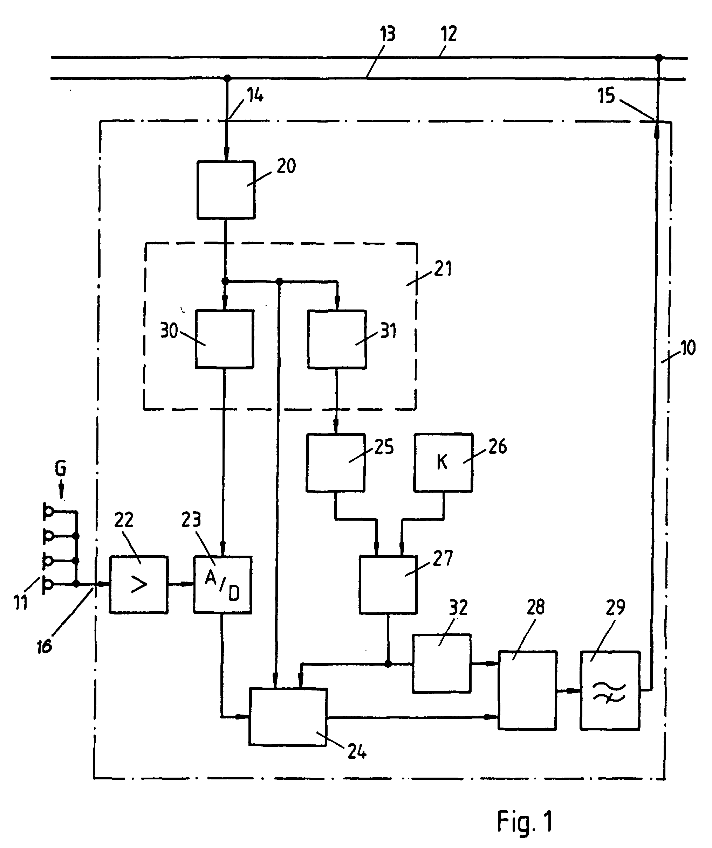

Fig. 1 zeigt ein Blockschaltbild einer Schaltanordnung 10 am Wandlerort einer ausgedehnten Empfangsanordnung, in diesem Fall am Hydrophonort einer Schleppantenne. Dort befinden sich ein oder mehrere Hydrophone 11, die in einer Gruppe längs der Schleppantenne angeordnet sind. Die Schleppantenne weist eine durchgehende Datenleitung 12 und eine durchgehende Synchronisierleitung 13 auf, die beide durch die gesamte Schleppantenne geführt sind. Der Eingang 14 der Schaltanordnung 10 ist mit der Synchronisierleitung 13 fest verbunden, der Ausgang 15 der Schaltanordnung 10 ist mit der Datenleitung 12 zusammengeschaltet. Die Gruppe von zusammengeschalteten Hydrophonen 11 oder das eine Hydrophon am Hydrophonort liefern ein Empfangssignal an einem Signaleingang 16 der Schaltanordnung 10. Ein Taktgenerator 20 ist mit dem Eingang 14 verbunden und erhält von der Synchronisierleitung 13 Synchronisierimpulse eines Master-Clock-Generator, der sich am Anfang der Synchronisierleitung 13 befindet. Seine Frequenz wird bestimmt durch das Abtasttheorem für die Empfangssignale im höchsten Empfangsfrequenzbereich, die Vielzahl der Hydrophonorte und eine vorgegebene Bitlänge für die Digitalisierung des Empfangssignals am Signaleingang 16 der Schaltanordnung 10. Der Taktgenerator 20 verdoppelt die Frequenz des Master Clock und liefert Taktimpulse für die Digitalisierung und Übertragung der digitalisierten Empfangssignale. Die Synchronisation zwischen der Frequenz des Master Clocks und Taktfrequenz des Taktgenerators 20 erfolgt über eine PLL-Schaltung im Taktgenerator 20.

Der Ausgang des Taktgenerators 20 ist mit einem Zähler 21 verbunden, der durch Abzählen der Taktimpulse einen Zeitabschnitt TA schafft. Während des Zeitabschnitts TA wird das Empfangssignal am Signaleingang 16 nach einer Verstärkung über einen Vorverstärker 22, der ggf. in seiner Verstärkung über eine gesonderte Verstärkungsdatenleitung einstellbar oder regelbar ist, an einen Analog/Digitalwandler 23 geschaltet. Der Analog/Digitalwandler 23 ist mit dem Zähler 21 verbunden und gibt nach der Analog/Digitalwandlung das digitalisierte Empfangssignal an einen Schiebespeicher 24 weiter. Der Analog/Digitalwandler 23 erhält vom Zähler 21 während des Zeitabschnitts TA Taktimpulse vom Taktgenerator 20. Nach Ablauf des Zeitabschnitts TA liefert der Zähler 21 Kanalimpulse an einen Kanalzähler 25 im Abstand der Bitlänge des digitalisierten Empfangssignals. In einem Kanalzahlgeber 26 ist eine Kanalzahl eingestellt, die für jeden Hydrophonort unterschiedlich gewählt wird und den Hydrophonort charakterisiert. Wenn der Kanalzähler 25 die vorgegebene Kanalzahl erreicht, wird über einen Komparator 27 ein Tor 28 geöffnet und das digitale Empfangssignal aus dem Schiebespeicher 24 über das Tor 28 und einen Hochpaß 29 auf die Datenleitung 12 über den Ausgang 15 geschoben.

Die digitalisierten Empfangssignale werden immer dann auf die Datenleitung 12 geschaltet, wenn der Kanalzähler 25 am Hydrophonort die Kanalzahl erreicht hat. Vorzugsweise wird die Kanalzahl durch Numerieren der Hydrophonorte festgelegt, eine andere Codierung ist aber genauso möglich. Bei einer Durchnumerierung der Hydrophonorte befinden sich die Empfangssignale benachbarter Hydrophonorte hintereinander auf der Datenleitung 12. Bei einer anderen Codierung des Kanalzahlgebers 26 kann eine entsprechend andere Sortierung der Empfangssignale auf der Datenleitung 12 vorgenommen werden. Zur Sicherung des Datenbestandes können zwischen Schiebespeicher 24 und Tor 28 ein Paritygenerator und ein Latch vorgesehen werden.

Der Hochpaß 29 differenziert Rechteckimpulse des digitalisierten Empfangssignals und kompensiert das Tiefpaßverhalten der Datenleitung 12, so daß am Ende der Datenleitung 12 wieder Rechteckimpulse das digitalisierte Empfangssignal repräsentieren.

Der Zähler 21 besteht aus einem Abschnittszähler 30, mit dem der Zeitabschnitt TA für die Digitalisierung abgezählt wird. Der Abschnittszähler 30 liefert während des Zeitabschnitts TA an den Analog/Digitalwandler 23 Taktimpulse aus dem Taktgenerator 20 für eine zeitserielle Analog/Digitalwandlung des Empfangssignals vorgegebener Bitlänge, die kleiner als der Zeitabschnitt TA ist.

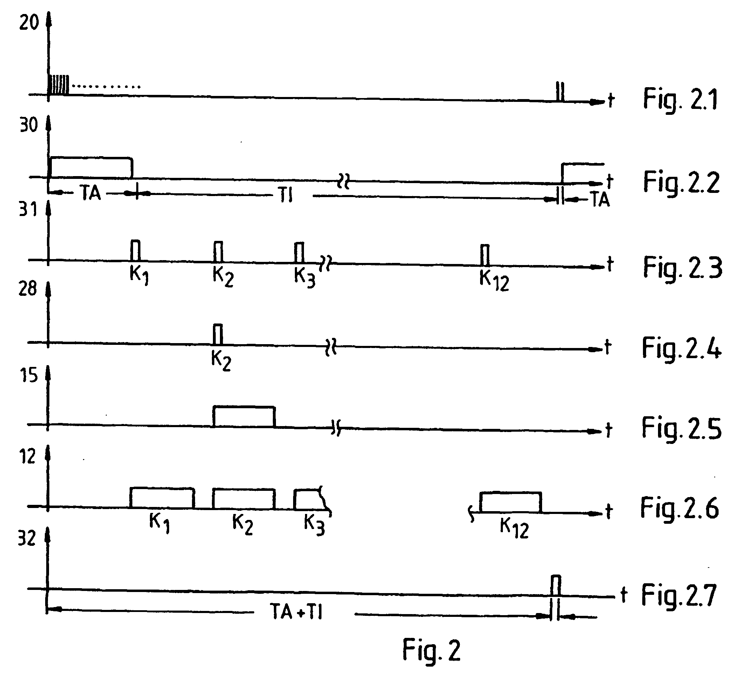

Fig. 2.1 zeigt ein Zeitdiagramm für den Master Clock, dessen Frequenz im Taktgenerator 20 verdoppelt wird und mit dem die Taktimpulse des Taktgenerators 20 synchronisiert sind. Fig. 2.2 zeigt den Zeitabschnitt TA.

Parallel zu dem Abschnittszähler 30 wird ein Transferzähler 31 vom Taktgenerator 20 gespeist. Nach Ablauf des Zeitabschnitts TA gibt der Transferzähler 31 jeweils im Abstand der Bitlänge Kanalimpulse K1, K2, ... Kn(n=12) ab, wenn n Empfangssignale über die Datenleitung 12 übertragen werden sollen, wie Fig. 2.3 zeigt. Die Kanalimpulse K1, K2, ..., werden im Kanalzähler 25 gezählt und sein Inhalt im Komparator 27 mit der Kanalzahl im Kanalzahlgeber 26 verglichen.

Fig. 2.4 zeigt das Ausgangssignal des Komparators 27, das bei der Kanalzahl K2 das Tor 28 öffnet, da im Kanalzahlgeber 26 die Kanalzahl K2 eingestellt ist. Gleichzeitig erhält der Schiebespeicher 24 Taktimpulse und schiebt das digitalisierte Empfangssignal über den Hochpaß 29 auf die Datenleitung 12, wie Fig. 2.5 zeigt. Ein Reset-Schalter 32 stellt den Zähler 21 wieder zurück, ggf. auch den Kanalzähler 25 und den Schiebespeicher 24, nachdem das Empfangssignal mit der letzten Kanalzahl Kn auf die Datenleitung 12 geschaltet worden ist. Dann ist ein Zeitintervall TI, innerhalb dessen digitalisierte Empfangssignale über die Datenleitung 12 übertragen werden, beendet und ein neuer Abtastzyklus beginnt.

Fig. 2.6 zeigt die Empfangssignale auf der Datenleitung 12 nach Erscheinen der Kanalzahl K12. Fig. 2.7 zeigt jeweils die Länge des Abtastzyklusses. Immer nach Ablauf des Abtastzyklusses TA+TI erscheint ein Reset-Signal am Ausgang des Reset-Schalters 32.

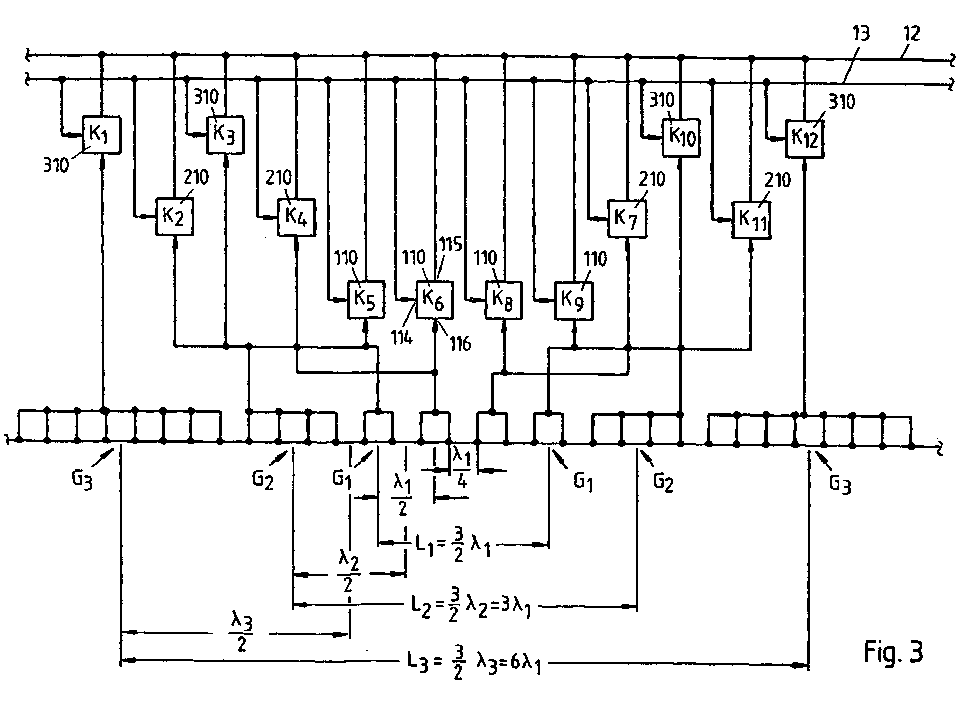

Fig. 3 zeigt Hydrophone längs einer Schleppantenne in äquidistantem Abstand λ1/4, wobei λ1 die Wellenlänge der höchsten zu empfangenden Frequenz zugeordnet ist. Ein gesamter Frequenzbereich, innerhalb dessen Empfangssignale zur Richtungsbildung verarbeitet werden sollen, wird in drei aneinandergrenzende Empfangsfrequenzbereiche, die jeweils eine Oktave umfassen, unterteilt. Jeweils eine gleiche Anzahl von Empfangssignalen wird zur Richtungsbildung herangezogen. Der Öffnungswinkel der so gebildeten Richtcharakteristiken ist über der Frequenz konstant, da eine wirksame Antennenlänge L₁, L₂, L₃, ausgehend vom höchsten Empfangsfrequenzbereich jeweils je Oktave verdoppelt wird. Es werden vier Gruppen von Hydrophonen gebildet und ihre Empfangssignale zur Richtungsbildung herangezogen. Für den höchsten Empfangsfrequenzbereich werden zwei Hydrophone zu Gruppen G1 zusammengefaßt, der Abstand der Hydrophonorte der Gruppen G1 beträgt λ1/2. Die Empfangssignale der Gruppen G1 werden Schaltanordnungen 110 über Signaleingänge 116 zugeführt.

Die Schaltanordnungen 110 sind identisch mit der Schaltanordnung 10 in Fig. 1, der Signaleingang 116 entspricht dem Signaleingang 16. Die Schaltanordnungen 110 sind mit ihren Eingängen 114 mit der Synchronisierleitung 13 verbunden. Der Eingang 114 entspricht dem Eingang 14 der Schaltanordnung 10. Die Ausgänge 115 der Schaltanordnung 110 sind mit der Datenleitung 12 der Schleppantenne verbunden. Der Ausgang 115 entspricht dem Ausgang 15 der Schaltanordnung 10.

An Hydrophonorten im Abstand λ2/2= λ1 befinden sich jeweils vier Hydrophone, die zu einer Gruppe G2 zusammengefaßt werden. Die Summe ihrer analogen Signale, wird als Empfangssignal in Schaltanordnungen 210 digitalisiert und auf die Datenleitung 12 geschaltet. Die Schaltanordnungen 210 sind genauso wie die Schaltanordnungen 110 mit der Synchronisierleitung 12 und der Datenleitung 13 verbunden und identisch mit der Schaltanordnung 10 in Fig. 1. Mit diesen Gruppen G2 von Hydrophonen wird eine Richtcharakteristik im Empfangsfrequenzbereich gebildet, dessen Frequenzen halb so groß wie die im höchsten Empfangsfrequenzbereich sind. Der Abstand λ2/2 der Hydrophonorte ist doppelt so groß wie der Abstand λ1/2 für den ersten Empfangsfrequenzbereich. Die wirksame Antennenlänge L₂= 2L₁ ist doppelt so groß wie die Antennenlänge L₁ für den höchsten Empfangsfrequenzbereich. Eine weitere Verdopplung der Antennenlänge L₃=2L₂=4L₁ sorgt für einen gleichen Öffnungswinkel für den niedrigsten Empfangsfrequenzbereich. Die Hydrophonorte befinden sich im Abstand λ3/2= λ2. Es können hier einerseits jeweils acht Hydrophone eine Gruppe G3 bilden und zu einem Empfangssignal zusammengefaßt werden, andererseits ist es aber auch möglich, im äußeren Bereich der Schleppantenne die Anzahl der Hydrophone je Gruppe G3 zu reduzieren und jeweils vier Hydrophone zu einer Gruppe G3 zusammenzufassen, wobei Schwerpunktsabstände der Gruppen λ3/2 auseinanderliegen. Die Empfangssignale dieser vier so gebildeten Gruppen G3 werden in Schaltanordnungen 310, die wie die der Schaltanordnung 10 in Fig. 1 aufgebaut sind, digitalisiert und auf die Datenleitung 12 geschaltet.

Bei diesem Beispiel werden insgesamt 4·3=12 Empfangssignale über die Datenleitung 12 zur Richtungsbildung übertragen. Kanalzahlen K1, K2, ..., K12 für die Schaltanordnungen 110, 210, 310 werden durchnumeriert und den zwölf Hydrophonorten zugeordnet. Abhängig von der Kanalzahl K1, K2, ..., K12 werden sämtliche Empfangssignale aneinandergereiht und über die Datenleitung 12 für die Richtungsbildung übertragen.

Eine andere Gruppenbildung von Hydrophonen je Hydrophonort ist ebenfalls vorteilhaft und beispielsweise zum Bilden von Kardioidencharakteristiken je Gruppe in der DE-PS 31 51 028 angegeben. Bei der hier vorgesehenen Schleppantenne weisen Nullstellen der Kardioidencharakteristik zum Schleppschiff und unterdrücken Spektrallinien im Schraubengeräusch des Schleppschiffs.

Die in Fig. 1 im Zusammenhang mit einer Schleppantenne dargestellte Schaltanordnung ist in gleicher Weise für andere ausgedehnte Empfangsanordnungen anwendbar, sei es im Zusammenhang mit Hydrophonen in einem Flank Array System, mit Mikrophonen oder Körperschallsensoren in einem Eigenstörmeßsystem an Bord eines Trägerfahrzeugs, z. B. U-Boot, Oberflächenschiff oder Landfahrzeug.

## Patentansprüche

1. Schaltanordnung zum zeitseriellen Übertragen von Empfangssignalen einer räumlich ausgedehnten Empfangsanordnung mit einer Vielzahl von elektroakustischen Wandlern von einem Wandlerort über ein Tor (28) über eine allen Wandlerorten gemeinsame Datenleitung (12) zu einer Empfangsanlage, wobei das Tor (28) mit einem Kanalzähler (25) aktivierbar ist, der Kanalzähler (25) von einem Taktgenerator (20) ansteuerbar und der Taktgenerator (20) über eine allen Wandlerorten gemeinsame Synchronisierleitung (13) synchronisierbar ist, **dadurch gekennzeichnet, daß** der Taktgenerator (20) an jedem Wandlerort die gleiche Taktfrequenz aufweist, daß der Taktgenerator (20) mit einem Zähler (21) zum Abzählen eines ersten Zeitabschnitts (TA) verbunden ist, daß dem Zähler (21) der Kanalzähler (25) und ein Analog/Digital-Wandler (23) für das Empfangssignal nachgeordnet sind, daß die Anordnung so gestaltet ist, daß im Gebrauch das Empfangssignal im Analog/Digital-Wandler (23) während des Zeitabschnitts (TA) gleichzeitig an allen Wandlerorten abgetastet und digitalisiert und in einem Schiebespeicher (24) abgespeichert wird, daß der Zähler (21) nach Ablauf des Zeitabschnitts (TA) zur Abgabe von Kanalimpulsen an den Kanalzähler (25) in einem anschließenden zweiten Zeitintervall (TI) ausgebildet ist, daß der Kanalzähler (25) und ein Kanalzahlgeber (26) für eine den Wandlerort kennzeichnende Kanalzahl mit einem Komparator (27) zum Öffnen des nachgeschalteten Tores (28) und Übertragen des digitialisierten Empfangssignals aus dem Schiebespeicher (24) auf die Datenleitung (12) zusammengeschaltet sind, sobald der Kanalzähler (25) die Kanalzahl aufweist.

2. Schaltanordnung nach Anspruch 1, **dadurch gekennzeichnet, daß** die Empfangsanordnung eine Schleppantenne ist, daß die Wandler Hydrophone sind, die hintereinander längs der Schleppantenne angeordnet sind und jeweils mehrere benachbarte Hydrophone (11) zu einer Gruppe (G) zusammengeschaltet sind zum Liefern des Empfangssignals mittels Summierung.

3. Schaltanordnung nach Anspruch 2, **dadurch gekennzeichnet, daß** die Hydrophone (11) einer Gruppe (G) äquidistant zueinander angeordnet sind und ein Abstand zwischen zwei Hydrophonen (11) ein Bruchteil der Wellenlänge (λ) der höchsten Empfangsfrequenz ist.

4. Schaltanordnung nach Anspruch 3, **dadurch gekennzeichnet, daß** die Anzahl der Hydrophone einer Gruppe abhängig von ihrem Abstand untereinander so gewählt ist, daß die Länge jeder Gruppe (G) kleiner oder gleich der halben Wellenlänge (λ) ist.

5. Schaltanordnung nach Anspruch 4, **dadurch gekennzeichnet, daß** die Anzahl der Hydrophone in den Gruppen (G) abhängig von Empfangsfrequenzbereichen wählbar ist und jeder Gruppe (G) ein Hydrophonort und eine Kanalzahl zugeordnet ist.

6. Schaltanordnung nach Anspruch 5, **dadurch gekennzeichnet, daß** die Anzahl der Hydrophone (11) je Gruppe (G) für höhere Empfangsfrequenzbereiche kleiner als für niedrigere Empfangsfrequenzbereiche ist.

7. Schaltanordnung nach einem der Ansprüche 3 bis 6, **dadurch gekennzeichnet, daß** die Hydrophone am Hydrophonort der Schleppantenne zu einer Gruppe (G) mit Kardioidencharakteristik, deren Nullstelle zum Schleppschiff der Schleppantenne weist, zum Liefern des Empfangssignals zusammengeschaltet sind.

8. Schaltanordnung nach einem der Ansprüche 1 bis 7, **dadurch gekennzeichnet, daß** der mit dem Taktgenerator (20) verbundene Zähler (21) einen Abschnittszähler (30) für den Zeitabschnitt (TA) und einen parallel dazu angeordneten Transferzähler (31) enthält, daß der Abschnittszähler (30) mit dem Analog/Digital-Wandler (23)für ein zeitserielles Digitalisieren des Empfangssignals vorgebbarer Bitlänge verbunden ist, daß dem Analog/Digital-Wandler (23) der Schiebespeicher (24) für das digitale Empfangssignal nachgeschaltet ist, daß der Transferzähler (31) nach Ablauf des Zeitabschnitts (TA) und jeweils einer Zahl von Taktimpulsen des Taktgenerators (20) entsprechend der Bitlänge des digitalisierten Empfangssignals zur Abgabe eines Kanalimpulses an den Kanalzähler (25) ausgebildet ist, daß der Schiebespeicher (24) mit dem Tor (28) verbunden ist und nach Erreichen der Kanalzahl durch die Taktimpulse des Taktgenerators (20) ansteuerbar ist.

9. Schaltanordnung nach Anspruch 8, **dadurch gekennzeichnet, daß** das Tor (28) als Leitungstreiber ausgebildet ist.

10. Schaltanordnung nach Anspruch 9, **dadurch gekennzeichnet, daß** dem Leitungstreiber (28) eine Differentiationsstufe (29) nachgeordnet ist, daß die Differentiationsstufe (29) ein Hochpaß ist und seine Zeitkonstante an das Tiefpaßverhalten und die Grenzfrequenz der Datenleitung (12) anpaßbar ist.

11. Schaltanordnung nach Anspruch 9 oder 10, **dadurch gekennzeichnet, daß** die Synchronisierleitung (13) einen Master Clock mit einer Frequenz aufweist, die abhängig von einer Abtastfrequenz für die Empfangssignale, der Vielzahl der Wandlerorte und der Bitlänge des digitalisierten Empfangssignals einstellbar ist, daß die Taktimpulsfrequenz des Taktgenerators (20) doppelt so hoch wie die Frequenz des Master Clock ist und daß der Taktgenerator (20) eine PLL-Schaltung zur Synchronisation mit dem Master Clock enthält.

12. Schaltanordnung nach einem der Ansprüche 1 bis 11, **dadurch gekennzeichnet, daß** zwischen Komparator (27) und Tor (28) ein Reed-Relais (32) vorgesehen ist, daß das Reed-Relais (32) durch einen außen am Wandlerort gehaltenen Magneten ein- und/oder ausschaltbar ist.

## Claims

1. Circuit arrangement for time-serial transmission of received signals of a spatially extended receiving arrangement with a multiplicity of electroacoustic transducers from a transducer location to a receiving plant via a gate (28) over a data line (12) common to all transducer locations, it being possible to activate the gate (28) with the aid of a channel counter (25), it being possible to drive the channel counter (25) by a clock generator (20), and it being possible to synchronize the clock generator (20) via a synchronization line (13) common to all transducer locations, **characterized in that** the clock generator (20) has the same clock frequency at each transducer location, **in that** the clock generator (20) is connected to a counter (21) for counting a first time interval (TA), **in that** arranged downstream of the counter (21) is the channel counter (25) and an analogue-to-digital converter (23) for the received signal, **in that** the arrangement is configured such that during use the received signal is sampled and digitized simultaneously at all transducer locations in the analogue-to-digital converter (23) during the time interval (TA) and stored in a shift register memory (24), **in that** the counter (21) is designed, after expiry of the time interval (TA), to output channel pulses to the channel counter (25) in a subsequent second time interval (TI), and **in that** a channel counter (25) and a channel number sensor (26) for a channel number characterizing the transducer location are interconnected with a comparator (27) for opening the downstream gate (28) and transmitting the digitized received signal from the shift register memory (24) to the data line (12) as soon as the channel counter (25) has the channel number.

2. Circuit arrangement according to Claim 1, **characterized in that** the receiving arrangement is a trailing antenna, and **in that** the transducers are hydrophones which are arranged one behind the other along the trailing antenna and in each case a plurality of neighbouring hydrophones (11) are interconnected to form a group (G) for the purpose of supplying the received signal by means of summing.

3. Circuit arrangement according to Claim 2, **characterized in that** the hydrophones of a group (G) are arranged equidistantly from one another, and a spacing between two hydrophones (11) is a fraction of the wavelength (λ) of the highest received frequency.

4. Circuit arrangement according to Claim 3, **characterized in that** the number of the hydrophones of a group is selected as a function of their spacing from one another such that the length of each group (G) is smaller or equal to half the wavelength (λ).

5. Circuit arrangement according to Claim 4, **characterized in that** the number of the hydrophones in the groups (G) can be selected as a function of received frequency bands, and each group (G) is assigned a hydrophone location and a channel number.

6. Circuit arrangement according to Claim 5, **characterized in that** the number of the hydrophones (11) per group (G) is smaller for higher received frequency bands than for lower received frequency bands.

7. Circuit arrangement according to one of Claims 3 to 6, **characterized in that** the hydrophones at the hydrophone location of the trailing antenna are interconnected for the purpose of supplying the received signal to form a group (G) with a cardioid characteristic whose cusp points to the drag ship of the trailing antenna.

8. Circuit arrangement according to one of Claims 1 to 7, **characterized in that** the counter (21) connected to the clock generator (20) includes an interval counter (30) for the time interval (TA) and a transfer counter (31) arranged in parallel therewith, **in that** the interval counter (30) is connected to the analogue-to-digital converter (23) for a time-serial digitization of the received signal of prescribable bit length, **in that** connected downstream of the analogue-to-digital converter (23) is the shift register memory (24) for the digital received signal, **in that** the transfer counter (31) is designed to output, after expiry of the time interval (TA) and in each case a number of clock pulses of the clock generator (20), a channel pulse to the channel counter (25) in accordance with the bit length of the digitized received signal, and **in that** the shift register memory (24) is connected to the gate (28) and, after the channel number is reached, can be driven by the clock pulses of the clock generator (20).

9. Circuit arrangement according to Claim 8, **characterized in that** the gate (28) is designed as a line driver.

10. Circuit arrangement to Claim 9, **characterized in that** a differentiation stage (29) is arranged downstream of the line driver (28), and **in that** the differentiation stage (29) is a highpass filter and its time constant can be adapted to the lowpass response and the cut-off frequency of the data line (12).

11. Circuit arrangement according to Claim 9 or 10, **characterized in that** the synchronization line (13) has a master clock with a frequency which can be set as a function of a sampling frequency for the received signals, the multiplicity of the transducer locations and the bit length of the digitized received signal, **in that** the clock pulse frequency of the clock generator (20) is twice as high as the frequency of the master clock, and **in that** the clock generator (20) includes a PLL circuit for synchronization with the master clock.

12. Circuit arrangement according to one of Claims 1 to 11, **characterized in that** provided between the comparator (27) and gate (28) is a reed relay (32), and **in that** the reed relay (32) can be switched on and/or off by a magnet held outside at the transducer location.

## Revendications

1. Arrangement de circuit pour la transmission en série dans le temps de signaux reçus d'un arrangement de réception étendu dans l'espace comprenant une pluralité de convertisseurs électroacoustiques depuis un lieu de conversion au-dessus d'une porte (28) par le biais d'une ligne de données (12) commune à tous les lieux de conversion vers un équipement de réception, la porte (28) pouvant être activée avec un compteur de canaux (25), le compteur de canaux (25) pouvant être commandé par un générateur d'horloge (20) et le générateur d'horloge (20) pouvant être synchronisé par le biais d'une ligne de synchronisation (13) commune à tous les lieux de conversion, **caractérisé en ce que** le générateur d'horloge (20) présente la même fréquence d'horloge à tous les lieux de conversion, que le générateur d'horloge (20) est relié à un compteur (21) pour décompter un premier intervalle de temps (TA), que le compteur de canaux (25) et un convertisseur analogique/numérique (23) pour le signal reçu sont branchés à la suite du compteur (21), que l'arrangement est configuré de telle manière qu'en utilisation, le signal reçu est échantillonné puis numérisé simultanément en tous les lieux de conversion dans le convertisseur analogique/numérique (23) pendant l'intervalle de temps (TA) puis est mémorisé dans un registre à décalage (24), que le compteur (21) est configuré pour délivrer des impulsions de canal au compteur de canaux (25) après écoulement de l'intervalle de temps (TA) dans un deuxième intervalle de temps suivant (TI), que le compteur de canaux (25) et un générateur de numéro de canal (26) pour un numéro de canal identifiant le lieu de conversion sont branchés ensemble avec un comparateur (27) pour ouvrir la porte (28) branchée en aval et transmettre les signaux reçus numérisés en provenance du registre à décalage (24) sur la ligne de données (12) dès que le compteur de canaux (25) présente le numéro de canal.

2. Arrangement de circuit selon la revendication 1, **caractérisé en ce que** l'arrangement de réception est une antenne remorquée, que les convertisseurs sont des hydrophones qui sont disposés les uns derrière les autres le long de l'antenne remorquée et plusieurs hydrophones (11) voisins sont à chaque branchés ensemble pour former un groupe (G) pour délivrer le signal reçu au moyen d'une addition.

3. Arrangement de circuit selon la revendication 2, **caractérisé en ce que** les hydrophones (11) d'un groupe (G) sont disposés de manière équidistante les uns par rapport aux autres et la distance entre deux hydrophones (11) est une fraction de la longueur d'onde (λ) de la fréquence de réception maximale.

4. Arrangement de circuit selon la revendication 3, **caractérisé en ce que** le nombre d'hydrophones d'un groupe est choisi en fonction de leur écartement mutuel de manière à ce que la longueur de chaque groupe (G) soit inférieure ou égale à la demi-longueur d'onde (λ).

5. Arrangement de circuit selon la revendication 4, **caractérisé en ce que** le nombre d'hydrophones dans les groupes (G) peut être choisi en fonction des plages de fréquence de réception et chaque groupe (G) est associé à un emplacement d'hydrophone et à un numéro de canal.

6. Arrangement de circuit selon la revendication 5, **caractérisé en ce que** le nombre d'hydrophones (11) de chaque groupe (G) pour les plages de fréquence de réception supérieures est inférieur à celui pour les plages de fréquence de réception plus basses.

7. Arrangement de circuit selon l'une des revendications 3 à 6, **caractérisé en ce que** les hydrophones à l'emplacement d'hydrophone de l'antenne remorquée sont branchés ensemble pour former un groupe (G) ayant une caractéristique cardioïde dont le point zéro est dirigé en direction du navire remorqueur de l'antenne remorquée pour délivrer le signal reçu.

8. Arrangement de circuit selon l'une des revendications 1 à 7, **caractérisé en ce que** le compteur (21) relié au générateur d'horloge (20) comprend un compteur d'intervalles (30) pour l'intervalle de temps (TA) et un compteur de transferts (31) disposé en parallèle avec celui-ci, que le compteur d'intervalles (30) est relié au convertisseur analogique/numérique (23) pour une numérisation en série dans le temps du signal reçu de longueur binaire prédéfinissable, que le registre à décalage (24) pour le signal reçu numérique est branché à la suite du convertisseur analogique/numérique (23), que le compteur de transferts (31) est configuré pour délivrer une impulsion de canal au compteur de canaux (25) après écoulement d'un intervalle de temps (TA) et à chaque fois un nombre donné d'impulsions d'horloge du générateur d'horloge (20) en fonction de la longueur binaire du signal reçu numérisé, que le registre à décalage (24) est relié à la porte (28) et peut être commandé par les impulsions d'horloge du générateur d'horloge (20) après avoir atteint le numéro de canal.

9. Arrangement de circuit selon la revendication 8, **caractérisé en ce que** la porte (28) est réalisée sous la forme d'un circuit pilote de puissance.

10. Arrangement de circuit selon la revendication 9, **caractérisé en ce qu'**un étage de différenciation (29) est branché à la suite du circuit pilote de puissance (28), que l'étage de différenciation (29) est un filtre passe-haut et sa constante de temps peut être adaptée en fonction du comportement passe-bas et de la fréquence limite de la ligne de données (12).

11. Arrangement de circuit selon la revendication 9 ou 10, **caractérisé en ce que** la ligne de synchronisation (13) présente une horloge de référence ayant une fréquence qui peut être réglée en fonction d'une fréquence d'échantillonnage des signaux reçus, de la pluralité des lieux de conversion et de la longueur binaire du signal reçu numérisé, que la fréquence des impulsions d'horloge du générateur d'horloge (20) est égale au double de la fréquence de l'horloge de référence et que le générateur d'horloge (20) contient un circuit PLL pour la synchronisation avec l'horloge de référence.

12. Arrangement de circuit selon l'une des revendications 1 à 11, **caractérisé en ce qu'**un relais Reed (32) est prévu entre le comparateur (27) et la porte (28), que le relais Reed (32) peut être activé et/ou désactivé par un aimant maintenu à l'extérieur au lieu de conversion.
